(19) Europäisches Patentamt

European Patent Office

Office européen des brevets

(11) **EP 1 501 065 A1**

(12) **EUROPEAN PATENT APPLICATION**

(43) Date of publication:
**26.01.2005 Bulletin 2005/04**

(51) Int Cl.⁷: **G09B 9/12**, B25J 17/02

(21) Application number: **03016720.9**

(22) Date of filing: **22.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Lai, William
Taipei (TW)**

(72) Inventor: **Lai, William
Taipei (TW)**

(74) Representative: **Helms, Joachim, Dipl.-Ing.
Patentanwalt
Dantestrasse 27
80637 München (DE)**

(54) **Parallel kinematic hexapodal dynamic simulator**

(57)   A hex-axis horizontal movement dynamic simulator (10) is aimed at Modular Design without hydraulic or pneumatic system but which were conventionally used in the so called Stewart Platform; this dynamic simulator (10) comprises three sets of movement control unit (20) with symmetrical structure located at the positions relative to each other forming three sides of an equilateral triangle, and a load-carrying platform (60) which is connected to the three movement control units (20) by means of three sets of universal-joint yoke mechanism (27), with this type of arrangement, this dynamic simulator have a 6-degree of freedom motion. When a set of movement control unit (20) makes different rectilinear motion, the load-carrying platform (60) generate a combination of spatial translation motion and angular motion.

Fig. 1

EP 1 501 065 A1

Printed by Jouve, 75001 PARIS (FR)

## Description

## BACKGROUND OF THE PRESENT INVENTION

### 1. Field of the Present Invention

This invention relates to a hex-axis horizontal movement dynamic simulator, particularly to a 6-degree of freedom motion simulating equipment in modular design.

### 2. Description of Prior Art

Since the structure of the 6-degree of freedom motion simulating platform in the early years was proposed by the Englishman Steward, this type of 6-degree of freedom motion simulating platform was customarily called the Stewart Platform.

For a long time, there was no any significant breakthrough of improvement or invention in the mechanism design of Stewart Platform which was still confined in the traditional idea of employing hydraulic or pneumatic system to achieve the effect of changing the length of the actuating rod by varying the stroke of cylinder rod to enable a 6-degree of freedom spatial motion. Moreover, since the parts and components constructing the conventional Stewart Platform are not in modular design, and the inherent drawback of oil and air leakage problem occasionally occurred with hydraulic and pneumatic system are always bother some that resulted in the inconvenience and disadvantage of replacing the parts and components in maintenance work.

Therefore, the purpose of the present invention is to provide solution to the problem of the conventional Stewart Platform as mentioned above by employing the modular design as the core of the invention instead of the hydraulic or pneumatic system adopted by the conventional Stewart Platform.

## SUMMARY OF THE PRESENT INVENTION

The major purpose of the present invention is to provide a hex-axis horizontal movement dynamic simulator which can simulate the motion of 6 degrees of freedom without employing hydraulic or pneumatic system.

The minor purpose of the invention is to provide a hex-axis horizontal movement dynamic simulator having modular structure which comprises three modular movement control units of the same structure located at the positions relative to each other forming three sides of an equilateral triangle and pivoted to a load-carrying platform by means of the universal-joint yoke mechanism corresponding to each of the three movement control units to construct simulation platform for simulating the motion of 6 degrees of freedom.

Another purpose of the invention is to provide a specific structure of the modular movement control unit which can precisely control the movement of the load-carrying platform, and enable a structure of motion simulation platform having 6 degrees of freedom.

## BRIEF DESCRIPTION OF THE DRAWING FIGURES

Fig. 1 is the pictorial drawing showing the structure of the first embodiment of the hex-axis horizontal movement dynamic simulator of the invention which has three sets of movement control unit of the same structure located separately at the positions forming three sides of an equilateral triangle.

Fig. 2 is the schematic drawing of the hex-axis horizontal movement dynamic simulator shown in Fig. 1 showing the variation of translation and angular motion of the load-carrying platform.

Fig. 3 is a schematic drawing of the invention shown in Fig. 2 viewed from other direction.

Fig. 4 is the disassembly drawing showing the parts of the movement control unit shown in Fig. 1.

Fig. 5 is the pictorial drawing showing the structure of the second type of embodiment of the hex-axis horizontal movement dynamic simulator of the invention having three sets of movement control unit of the same structure located separately at the positions forming three sides of an equilateral triangle.

Fig. 6 is the disassembly drawing showing parts of the movement control unit shown in Fig. 5.

Fig. 7 is the pictorial drawing showing the structure of the third type of embodiment of the hex-axis horizontal movement dynamic simulator of the invention having three sets of movement control unit of the same structure located separately at the positions forming three sides of an equilateral triangle.

Fig. 8 is the disassembly drawing showing the parts of the movement control unit shown in Fig. 7.

## DETAILED DESCRITION OF THE PREFERRED EMBODIMENTS

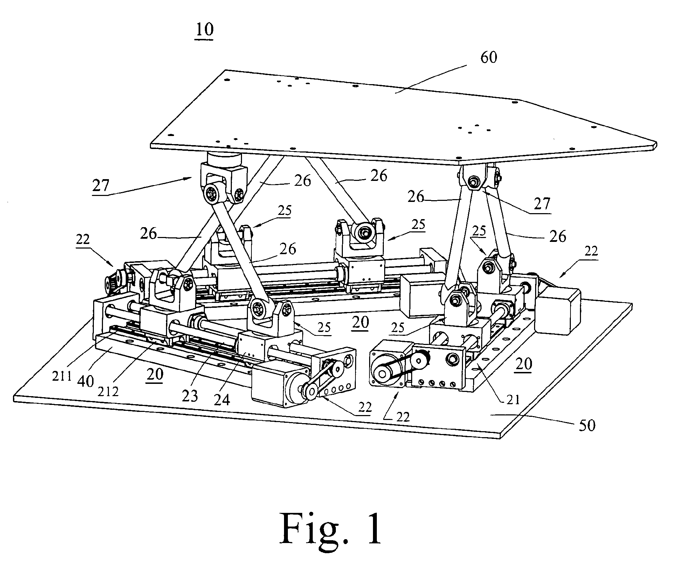

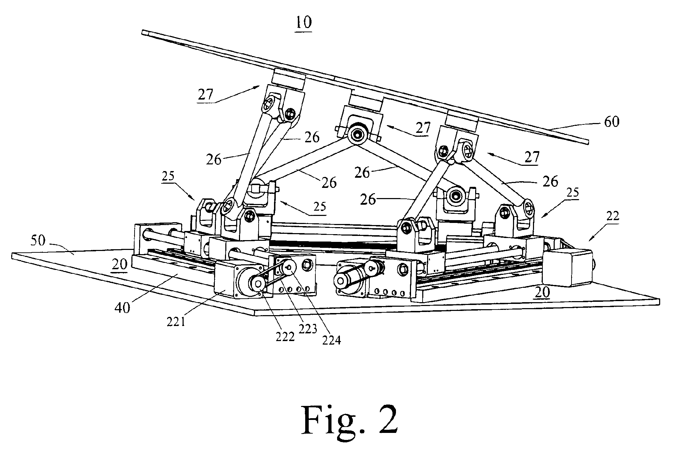

Now refer to Fig. 1 and Fig. 2, the key point of the present invention is that no any hydraulic or pneumatic system being used by the hex-axis motion simulator (10) is employed. One end of both connecting rods (26) of fixed length are pivoted to a set of universal-joint yoke mechanism (27), and the other end of the connecting rods (26) are separately connected to the transmission-joint yoke mechanism (25). Further, the said transmission-joint yoke mechanism (25) is pivoted to a set of sliding seat (24), and the rectilinear translation motion and position of the transmission-joint yoke mechanism (25) is controlled by controlling the rectilinear translation and position of the sliding seat (24) through which the connecting rod (26) is actuated to generate a motion of 6 degrees of freedom which in turn controls the spatial motion and position of the load-carrying platform.

The hex-axis horizontal movement dynamic simulator (10) as depicted in the invention comprises three movement control units (20) of the same structure which are fixed on the foundation (50) at the locations relative to each other forming three sides of an equilateral triangle. Each of the three movement control units (20) is pivoted to the load carrying platform (60) by means of a universal-joint yoke mechanism (27). Thus the locations at which the three sets of universal joint yoke mechanism (27) are pivoted to the load-carrying platform (60) form an equilateral triangle.

Each movement control unit (20) is symmetrically structured to comprise a set of universal-joint yoke mechanism (27), two connecting rods of fixed length (26), two sets of transmission-joint yoke mechanism (25), two sets of sliding seat (24), two lead screws (23), two sets of servo-driving mechanism (22) and a set of rectilinear translation guide (21). Since the universal-joint yoke mechanism (27) is pivotally connected to the load-carrying platform (60), it can generate a motion of 1 degree of freedom relative to the load-carrying platform (60); and since one end of each of the two connecting rods (26) is pivotally connected to the same universal-joint yoke mechanism (27), then the connecting rod can generate a motion of 2 degrees of freedom.

Therefore, the end at which the connecting rod is pivoted to the universal joint yoke mechanism (27) has 3 degrees of freedoms for generating a spatial motion relative to the load-carrying platform.

Further, another end of the two connecting rods are symmetrically pivoted to separate driving joint yoke mechanism (25) that can generate a spatial motion of 2 degrees of freedom also, since the transmission-joint yoke mechanism (25) of each connecting rod (26) is pivoted to a set of sliding seat (24), the transmission-joint yoke mechanism (25) has 1 degree of freedom for generating a spatial motion relative to the sliding seat (24).

Therefore, the end at which the connecting rod (26) is pivoted to the transmission-joint yoke mechanism (25) has 3 degrees of freedom relative to the sliding seat (24) in making a spatial motion also.

Based on the above-mentioned arrangement, both ends of each connecting rod (26) of each movement control unit (20) all have 3 degrees of freedom for generating a spatial motion, and, because all the connecting rods are rigid body of fixed length, therefore when the sliding seat (24) makes a rectilinear displacement, the transmission-joint yoke mechanism (25) on one end of the connecting rod (26) is restricted to do rectilinear translation together with the sliding seat (24) that enables the connecting rod (26) to generate a spatial displacement of 6 degrees of freedom, and through the variation of spatial position of every connecting rod (26), the universal-joint yoke mechanism (27) on another end of the connecting rod (26) will generate a relative spatial-displacement following the rectilinear displacement of the transmission-joint yoke mechanism (25).

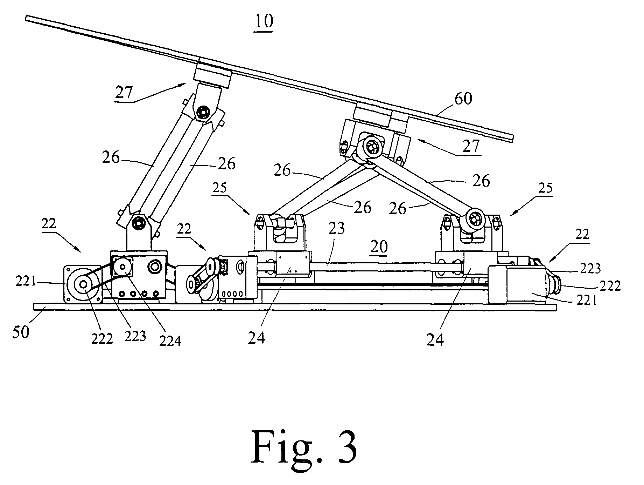

Therefore, when the sliding seat (24) makes a rectilinear translation to another place together with the transmission joint yoke mechanism (25) its pivoted to, the spatial position of the connecting rod (26) on the transmission joint yoke mechanism (25) associated with 6 degrees of freedom will varied, i.e. the universal-joint yoke mechanism (27) on one end of each connecting rod (26) will changes its spatial position relative to the transmission joint yoke mechanism (25), and actuate the load-carrying platform (60) to varying its spatial position. Refer to Fig. 1 through Fig. 3, corresponding to the rectilinear displacement of different sliding seats (24) sliding on different movement control units (20) which are respectively located at the positions forming three sides of an equilateral triangle, there will have relative displacements spatially generated by the load-carrying platform (60). Therefore, through the synchronous and precise control of the rectilinear movement of each sliding seat (24) of each movement control unit (20), such as the synchronous control of the rectilinear movement of each sliding seat (24) by computer system, the spatial movement of each set of universal-joint yoke mechanism (27) relative to each other can be precisely controlled to achieve a precise control of the motion of load-carrying platform (60) to generate linear and angular displacement spatially.

In the present invention the mechanism which enables each sliding seat (24) of each movement control unit (20) to generate a rectilinear motion comprises two lead screws (23), two sets of servo-driving mechanism (22) including servo-motor (221), a rectilinear translation guide (21) including two guide seats (212) and two straight sliding rail (211). Each sliding seat (24) has female screw thread which engages with the lead screw (23). The servo-motor (221) of the servo-driving mechanism (22) is employed to drive the lead screw (23) to rotate that enables the sliding seat (24) on one of the guide seats (212) of the rectilinear translation guide (21) to be guided by the straight sliding rail (211) and to generate a rectilinear displacement. Therefore, the rectilinear movement of each sliding seat (24) can be precisely controlled by the precise control of the rotating speed and angular displacement of the servo-motor (221) of each servo-driving mechanism (22) through which a precise control of the variation of linear and angular displacement of the load-carrying platform (60) can be achieved.

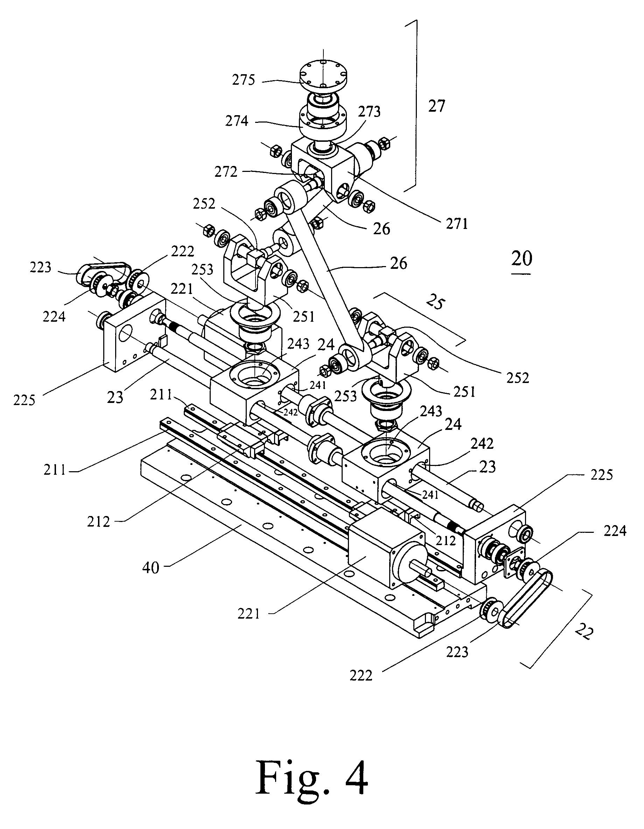

The first type of embodiment of the movement control unit (20) is shown in Fig. 1 through Fig. 4, which comprises at least a base seat (40), a set of universal joint yoke mechanism (27), two connecting rods of fixed length (26), two sets of transmission-joint yoke mechanism (25), two sets of sliding seat (24), two lead screws (23), two sets of servo-driving mechanism (22) and a rectilinear translation guide (21).

The base seat (40) is a longitudinal plate fastened to the foundation (50) by bolt. The rectilinear translation guide (21) has two linear sliding rails (211) parallel to each other and two identical guide seats (212). The two linear sliding rails (211) are installed on the surface of the base seat (40) along the longitudinal direction of the base seat and parallel to each other, and the bottom side of each guide seat (212) are two parallel guide slots which are prepared to match the shape and gauge of the two straight sliding rails (211), thus each guide seat (212) can be installed on and match the two straight sliding rails (211), and slide on the two straight sliding rails along the guiding direction.

Each servo-driving mechanism (22) comprises a servo-motor (221) assembled with a driving pulley (222), a driving belt (223), a driven pulley (224) and a bearing plate (225) which drives a lead screw (23). The bearing plate (225) of each servo-driving mechanism (22) are installed in a position near both ends of the base seat (40) to form the bracket for mounting the two lead screws (23) by means of bearings to have the two lead screws (23) parallel to the two straight sliding rails (211); The driving pulley (222) is mounted on the driving shaft of the servo-motor (221), and the driven pulley (224) is mounted on the lead screw (23). The driving pulley (222) and the driven pulley (224) are connected by the driving belt (223).

The sliding seat (24) is in rectangular shape and is fastened to the guide seat (212) of the rectilinear translation guide (2 1 ). On the sliding seat (24) two penetrating holes (241), (242) are prepared of which the hole (241) has female screw thread, and engages with the lead screw (23), another hole (242) is a passage for another lead screw (23) to pass through; Further, on the tope surface of each sliding seat (24) is a mounting recess (243) for pivotally mounting the transmission joint yoke mechanism (25).

The transmission-joint yoke mechanism (25) comprises a U shaped yoke (251) and T shaped pivot axis. The horizontal stub shaft formed on both sides of the T shaped pivot axis are pivoted to the two vertical portions of the U shaped yoke (251) by means of bearing and nut that enables the perpendicular stub shaft of the T shaped pivot axis to have 1 degree of freedom of rotation motion relative to the U shaped yoke (251). Besides, on the bottom side of the U shaped yoke (251) is a mounting shaft (253) which is pivotally mounted to the mounting recess (243) by means of bearing and nut that enables the transmission joint yoke mechanism (25) to have 1 degree of freedom of rotating motion relative to the sliding seat (24) it's pivoted to. Or the perpendicular stub shaft of the T shaped pivot axis (252) of each transmission-joint yoke mechanism (25) has 2 degrees of freedom of rotating motion relative to the sliding seat (24) it's mounted to.

The universal-joint yoke mechanism (27) comprises an inversed U shaped yoke (271), a cardan shaft (272), a neck-ring seat (274) and a cover plate (275). The left and right horizontal stub shaft formed on both sides of the cardan shaft (272) are pivoted to the two vertical portions of the inversed U shaped yoke (271) by means of bearing and nut etc. that enables the perpendicular stub shaft formed on front and rear side of the cardan shaft (272) to have 1 degree of freedom of rotating motion relative to the inversed U shaped yoke (271), moreover, on the top side of the inversed U shaped yoke (271) is a mounting shaft (273) which is pivoted to the neck-ring seat (274) by means of a bearing, and a cover plate (275) is mounted on the upper side of the neck-ring seat (274) through which the whole assembly of the universal-joint yoke mechanism (27) is mounted on the load-carrying platform (60), thus the inversed U shaped yoke (271) has 1 degree of freedom of rotating motion relative to the neck-ring seat (274) or the cover plate (275) it is pivoted to, or the perpendicular stub shaft on the front and rear side of the cardan shaft (272) of the inversed U shaped yoke (271) has 2 degrees of freedom of rotating motion relative to the neck-ring seat (274) or cover-plate (275).

Every connecting rod (26) has fixed length. On both ends of the connecting rod (26) are pivoting holes through which the front end of the connecting rod is pivotally connected to the front perpendicular stub shaft or rear perpendicular stub shaft of the cardan shaft (272) of the universal-joint (27) that enables the pivoting hole on the front end of the connecting rod (26) has 1 degree of freedom of rotating motion relative to the perpendicular stub shaft of the cardan shaft (272) it's pivoted to, or, the pivoting hole on the front end of every connecting rod (26) has 3 degrees of freedom of rotating motion relative to the neck-ring seat (274) or cover plate (275) ; Besides, the pivoting hole on the rear end of every connecting rod (26) is pivotally connected to the perpendicular stub shaft of the T shaped pivot axis (252) by means of bearing and nut that enables the pivoting hole on the rear end of every connecting rod (26) to have 1 degree of freedom of rotating motion relative to the perpendicular stub shaft of the T shaped pivot axis (252) it's pivoted to, or , the pivoting hole on the rear end of every connecting rod (26) has 3 degrees of freedom of rotating motion relative to the sliding seat (24) it belongs to.

Since each end of the connecting rod (26) has 3 degrees of freedom of rotating motion, the whole connecting rod (26) has 6 degrees of freedom for generating a spatial motion. The above-mentioned mechanism, as verified by the equation of mobility in Spatial Mechanism, is proved to be above to generate a spatial motion of 6 degrees of freedom i.e. according to Gruebler's formula for spatial mechanism:

$$F = 6\left(L - j - 1\right) + \sum_{i=1}^{j} f_i$$

$$L = 32, j = 36, \sum_{i=1}^{j} f_i = 36; F = 6$$

Where

F:     Number of degree of freedom of the whole mechanism

L:     Total number of members in the mechanism

J:     Total number of joint in the mechanism

$f_i$:     The number of degree of freedom of the $i^{th}$ joint.

Therefore, the relative rotating angle and rotating speed of the servo-motor (22 1 ) of the servo-driving mechanism (22) of each movement control unit (20), based on the required data or condition of the relative motion of the load-carrying platform (60) in space and by applying the precise calculation and control of computer system (not shown in drawings), can be synchronously controlled, and the sliding seat (24) and transmission-joint yoke mechanism (25) on each of the three movement control unit can synchronously generate different rectilinear movement to drive the connecting rod (26) to generate relative spatial-displacement to control the relative spatial-movement of each universal-joint yoke mechanism (27) thus enable the load-carrying platform (60) to generate different movement to attain the purpose of varying its of posture and angular position that can simulate the state of a carrier (such as vehicle, ship, airplane and roller coaster etc.) in making a spatial motion of 6 degrees of freedom.

In the following is another embodiment of the movement control unit (20) which has the same mechanical structure of the same effect as that of the first type embodiment of the movement control unit (20) as depicted in the above, and applies the same technical means and actuating principle to enable the load-carrying platform (60) to simulate a spatial motion of 6 degrees of freedom. However, the construction members and the inter-actuating relationship can be obtained by reference to the detailed description of the first type embodiment mentioned above, which shall not be repeated here, the following description is only for the structure of other type of embodiment of the movement control unit (20).

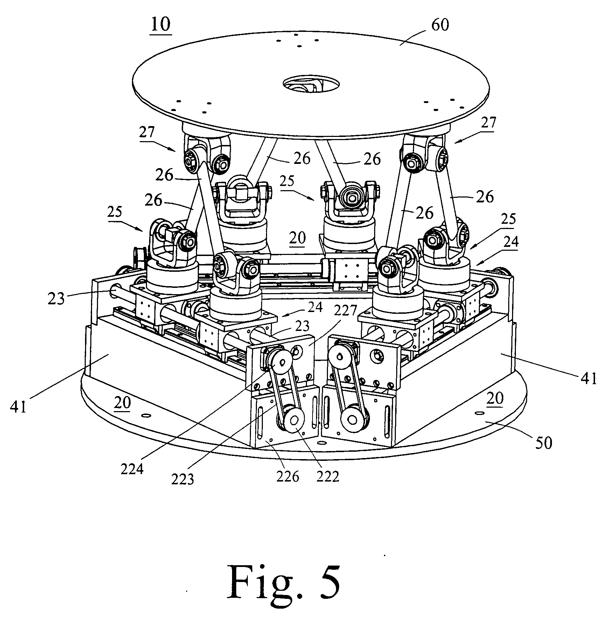

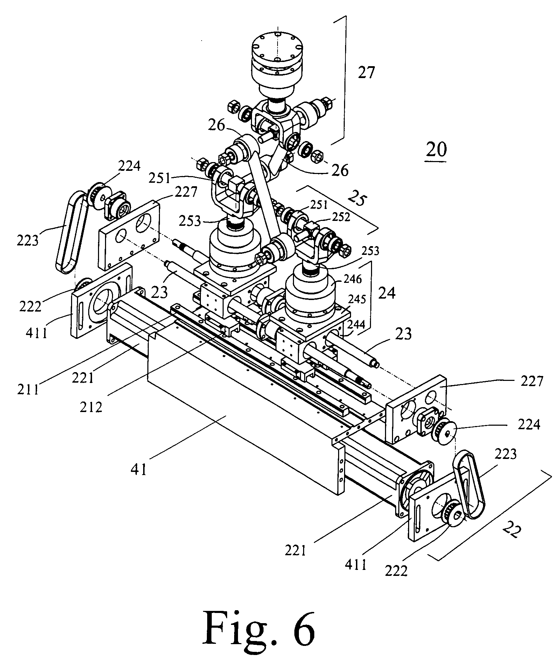

The second type of embodiment of the movement control unit (20) is shown in Fig. 5 and Fig. 6 which comprises at least a machine bed (41), one set of universal-joint yoke mechanism (27), two connecting rods (26) of the fixed length, two sets of transmission-joint yoke mechanism (25), two sets of sliding seat (24), two lead screws (23), two servo-driving mechanism (22) and a rectilinear translation guide (21) in which the components of the universal-joint yoke mechanism (27), the connecting rod (26), the transmission-joint yoke mechanism (25), the lead screw (23), the servo-driving mechanism (22) and the rectilinear translation guide (21) are all the same as those in the aforesaid first type of embodiment of the present invention.

But the machine bed (41) of the second type of embodiment of the invention is a rectangular stand made of metal plate having inversed U shaped cross-section which is fastened on the foundation (50), the cover plate (411) is mounted on both of the left and right end of the machine bed (41) having holes and opening prepared on appropriate position, the servo-motor (221) of the servo-driving mechanism (22) is installed inside the machine bed (41). The driving shaft of the servo-motor (221) extends to the outside of the machine bed (41). Through the opening on the cover plate (411) of the machine bed (41) a driving pulley (222) is mounted and fastened on the driving shaft of the driving-servo motor (221). Two support plates (227) of the servo-driving mechanism (22) are installed at the places closed to both ends of the machine bed (41) to form the support for pivotally mounting the two lead screws (23) by means of bearings in a position parallel to the two straight sliding rails (211) of the rectilinear translation guide (21). The driven pulley (224) is mounted and fastened on the lead screw (23) with a transmission belt installed on and passing through the driving pulley (222) and driven pulley (224). Therefore, the driving power of the servo-motor (221) is transmitted to the lead screw (23) through the driving pulley (222), the transmission belt (223) and the driven pulley (224).

The sliding seat (24) employed in the second type of embodiment of the invention comprises at least a sliding block (244) and a neck ring seat (246). The sliding block (244) is fastened on the guide seat (212) of the rectilinear translation guide mechanism (21). On the sliding block (244) two holes are provided, one of which has female screw thread, and engages with a lead screw (23), another hole serves as the passage for another lead screw to pass through; the neck-ring seat (246) is fastened on the tope side of the sliding block (244), or, a fastening plate (245) shall be installed on the top side of the sliding block (244) at first, and then fasten the neck-ring (246) on the fastening plate (245). The mounting shaft (253) of the U shaped yoke (251) of the transmission-joint yoke mechanism (25) is pivoted to the circular access on the tope side of the neck-ring seat (246) by means of bearing and related parts.

What shall be mentioned here is that the sliding seat (24) employed in the second type of embodiment and the same in the first embodiment can be exchanged and used in either of the two types of embodiment, or in other embodiments of the invention.

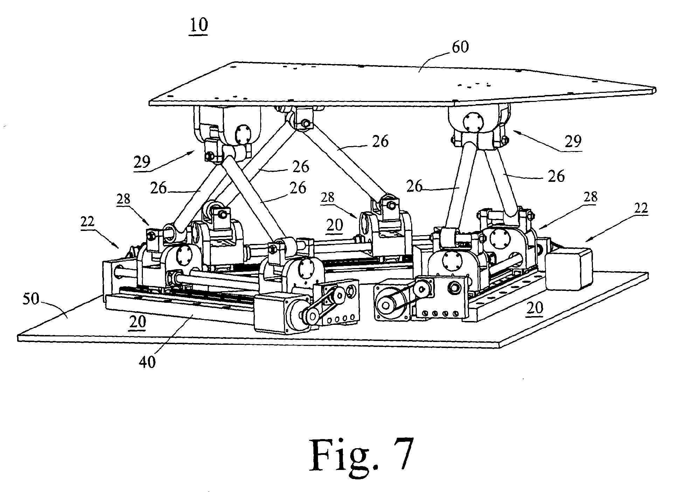

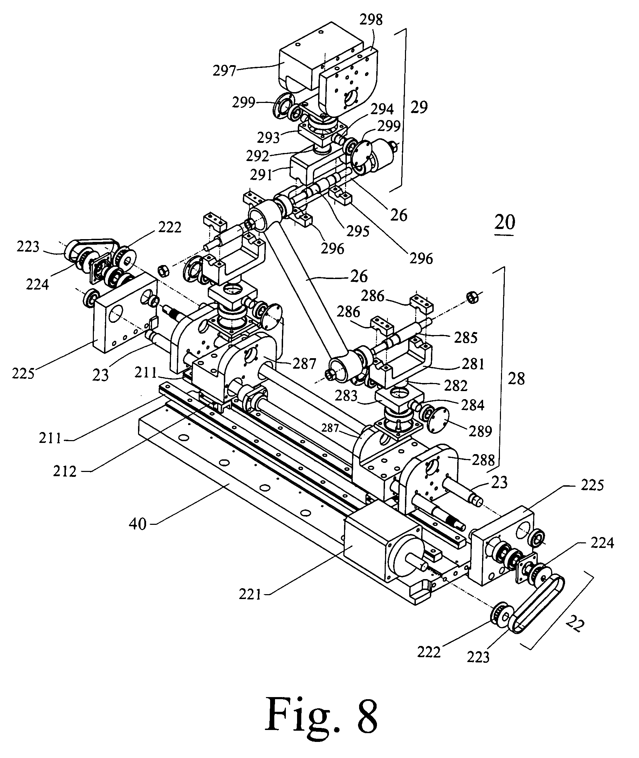

The third type of embodiment of the movement control unit (20) is shown in Fig. 7 and Fig. 8 which compresses at least a base seat (40), a set of universal-joint yoke mechanism (29), two connecting rods (26) of fixed length, two sets of sliding yoke mechanism (28), two leading screws (23), two sets of servo-driving mechanism (22) and a rectilinear translation guide (21) wherein the said connecting rod (26), lead screw (23), servo-driving mechanism (22) and rectilinear translation guide (21) are the same as those employed in the first type of embodiment, and the structure of the universal-joint yoke mechanism (29) is similar to the sliding yoke mechanism (28).

The universal-joint yoke mechanism (29) of the aforesaid third embodiment comprises an inversed U shaped yoke assembly (291), a pivoting plate (293), a pivoting shaft (295), two fixing blocks (296), a L shaped yoke plate (297), a fastening yoke plate (298) and two cover plates (299). The L shaped yoke plate is formed by a horizontal portion and a vertical portion. The horizontal portion is fastened on the load-carrying platform (60), and on the vertical portion hole is provided for mounting shaft. The fastening yoke plate (298) is a plate shaped member with appropriate thickness having appearance symmetric to that of the vertical portion of the L shaped yoke plate (297). Shaft mounting hole is also provided on the fastening yoke plate (298) which is to be assembled with the L shaped yoke plate (297) to form a yoke assembly. The pivoting plate (293) is in rectangular shape with a pivoting access in its center position and horizontal stub shafts (294) extended symmetrically from both sides opposite to each other which are pivotally mounted in the hole on the L shaped yoke plate (297) and the fastening yoke plate (298) by means of bearings and related parts, the two cover plates are fastened on one side of the vertical portion of the L shaped yoke plate (297) and the fastening yoke plate (298) to fix the whole assembly that enables the pivoting plate (293) to have 1 degree of freedom of rotating motion relative to the L shaped yoke plate (297) and the fastening yoke plate (298) its fastened to; The yoke assembly (291) has a mounting shaft (292) extended upwardly from its top side and is mounted in the pivoting access in the center position of the pivoting plate (293) by means of bearing, and a cover is fastened on the mounting surface of the pivoting plate to fix the assembly. Therefore, the yoke assembly has 1 degree of freedom of rotating motion relative to the pivoting plate 293 its pivoted to, or has 2 degrees of freedom of motion relative to the L shaped yoke plate (297) and the fastening yoke plate (298); The bottom side of the two flanks of the yoke assembly (291) has semicircular recess, and the fixing block (296) also has corresponding semicircular recess on top side. A shaft (295) is pivotally installed by fixing the two fixing blocks on the bottom side of the two flanks of the yoke assembly (291), and both ends of the pivoting shaft (295) can be pivotally connected to the connecting rod (26) that enables the pivot hole on the front end of each connecting rod has 1 degree of freedom of rotating motion relative to the yoke assembly (291) it's pivoted to, or, has 3 degrees of freedom of rotating motion relative to the L shaped yoke plate (297) and the fastening yoke plate (298).

The sliding yoke mechanism (28) employed in the third embodiment comprises a U shaped yoke assembly (281), a pivoting plate (283), a shaft (285), two fixing blocks (286), a L shaped sliding yoke plate (287), a sliding fastening plate (288) and two cover plates (289). The said L shaped sliding yoke plate (287) has a horizontal portion and a vertical portion, and is fastened on the guide seat (212) of the rectilinear translation guide (21) through its horizontal portion. Besides, the L shaped sliding yoke plate (287) has two penetrating holes one of which has female screw thread, and engages with the lead screw (23), another hole serves as passage for another lead screw (23) to pass through. In addition, the vertical portion of the L shaped sliding yoke plate (287) has a pivoting hole. The sliding fastening plate (288) is a plate shaped member with appropriate thickness having appearance symmetric to that of the vertical portion of the L shaped sliding yoke plate. Two penetrating holes and a pivoting hole are provided on the sliding fastening plate (288) of which the two penetrating holes are for the two lead screws (23) to pass through. A yoke assembly is formed by assembling the sliding fastening plate (288) and the L shaped sliding yoke plate (287). The pivoting plate (283) is in rectangular shape with a pivoting access in center position and horizontal stub shafts (284) extended symmetrically from both sides opposite to each other which are pivotally mounted in the hole on the L shaped sliding yoke plate (287) and the sliding fastening yoke plate (288) by means of bearing and related parts, and then two cover plates are fastened on one side of the vertical portion of the L shaped sliding yoke plate (287) and the sliding fastening plate (288) to fix the whole assembly that enables the pivoting plate (283) has 1 degree of freedom of rotating motion relative to the L shape sliding yoke plate (287) and the sliding fastening plate (288) it's pivoted to. The yoke assembly (281) has a mounting shaft (282) extended downwardly from its bottom side which is pivotally mounted in the pivoting access in the center position of the pivoting plate (283) by means of bearing and the related parts, and a cover is fastened on the pivoting plate (283) to fix the assembly, therefore, the U shaped yoke assembly (281) has 1 degree of freedom of rotating motion relative to the pivoting plate (283), or has 2 degrees of freedom of rotating motion relative to the L shaped sliding yoke plate (287) and the sliding fastening plate (288). The tope side of the two vertical portions of the U shaped yoke assembly has semicircular recess, and the corresponding semicircular recess is also provided on the fixing block (286) on the bottom side. A shaft (285) is pivotally installed by fixing the two fixing blocks (286) on the top side of the U shaped yoke assembly, and both ends of the pivoting shaft (285) can be pivotally connected to the connecting rod (26) that enables the pivot hole on the rear end of the connecting rod (26) has 1 degree of freedom of rotating motion relative to the U shaped yoke assembly (281), or has 3 degrees of freedom of rotating motion relative to the L shaped sliding yoke plate (287) and the sliding fastening plate (288). Since either of the two ends of the connecting rod (26) has 3 degrees of freedom of rotating motion, each connecting rod (26) shall have 6 degrees of freedom of rotating motion in space.

**Claims**

1. A hex-axis horizontal movement dynamic simulator comprising three sets of movement control unit of the same structure located separately at the positions forming three sides of an equilateral triangle, and a load-carrying platform pivotally connected to the three movement control units by means of universal-joint yoke mechanism corresponding to each movement control unit; wherein each movement control unit comprises at least a set of universal-joint yoke mechanism, two connecting rods of fixed length, two sets of transmission-joint yoke mechanism and two sets of sliding seat for generating rectilinear translation motion to form a symmetric structure, one end of the two connecting rods are jointly pivoted to the universal-joint yoke mechanism to enable a spatial motion of 3 degrees of freedom relative to the load-carrying platform while the other end of the two connecting rods are symmetrically and separately pivoted to the corresponding transmission-joint yoke mechanism to enable a spatial motion of 2 degrees of freedom, and the transmission-joint yoke mechanism is pivoted to the corresponding sliding seat to enable 1 degree of freedom.

2. The hex-axis horizontal movement dynamic simulator as defined in claim 1, wherein each movement control unit comprises a set of universal-joint yoke mechanism, two connecting rods of fixed length, two sets of transmission- joint yoke mechanism, two sets of sliding seat, two lead screws, two sets of servo-driving mechanism and a set of rectilinear translation guide to form a symmetrical structure, one end of the two connecting rods are jointly pivoted to the universal-joint yoke mechanism to enable a spatial motion of 3 degrees of freedom relative to the load-carrying platform while the other end of the two connecting rods are symmetrically and separately pivoted to the corresponding transmission-joint yoke mechanism to enable a spatial motion of 2 degrees of freedom, and the transmission-joint yoke mechanism is pivoted to the corresponding sliding seat to enable 1 degree of freedom, the two lead screws pass through the two sliding seats and engage with the corresponding sliding seat with rotating angle and speed controlled by the servo-driving mechanism, the two sliding seats are mounted and capably sliding on the rectilinear translation guide; with this arrangement the rectilinear translation motion of the sliding seat on the corresponding rectilinear translation guide precisely controlled by the precise control of the rotating angle and speed of the corresponding sliding seat to enable a precise control of the spatial motion and linear and angular displacement of the load-carrying platform.

3. The hex-axis horizontal movement dynamic simulator as defined in claim 2, wherein the rectilinear translation guide comprises two straight sliding rails in parallel fixed on a guide, and two guide seats each of which has two parallel guide slots on bottom side to match and ride on the two parallel straight sliding rails and slide along the direction of guide rails;

each servo-driving mechanism comprises at least a servo-motor which drives the corresponding lead screw and controls its rotating angle and speed;

each sliding seat is in the shape of a rectangular block having a pivoting recess on top side for pivotally mounting the corresponding transmission-joint yoke mechanism, and has its bottom side fastened to one of the guide seats, on the vertical surface of the sliding seat are two penetrating holes one of which has female screw thread, and engages with the corresponding lead screw while another hole serves as the passage for another lead screw to pass through;

each transmission-joint yoke mechanism comprises an upward yoke assembly and T shaped pivot axis which are pivotally assembled together with the yoke assembly, two horizontal stub shafts formed on and extend from the opposite side of the T shaped pivot axis and pivotally mounted on the two vertical portions of the upward yoke assembly and a perpendicular stub shaft extended from the center position for pivotally mounting one end of the corresponding connecting rod, and a mounting shaft is extended from the bottom side of the upward yoke assembly, and is pivotally mounted in the mounting recess of the corresponding sliding seat; and

the universal-joint yoke mechanism compressing a downward yoke, a cardan shaft, a neck-ring seat and cover plate in which two horizontal stub shafts are formed on, and extend oppositely from left and right side of the cardan shaft , and pivoted to the two vertical portions of the downward yoke, also two perpendicular stub shafts are formed on, and extend oppositely from the front and rear side of the cardan shaft which are separately and pivotally connected to the connecting rod; A mounting shaft formed on the top side of the downward yoke and pivotally mounted to the neck-ring seat, the bottom side of the cover pate is fastened to the upper side of the neck-ring seat while the top side of the cover plate is fastened to the aforesaid load-carrying platform.

4. The hex-axis horizontal movement dynamic simulator as defined in claim 3, wherein the structure of the sliding seat comprises at least a sliding block and a neck-ring seat, the bottom side of the sliding block is fastened to the guide seat of the rectilinear translation guide, which has two penetrating holes on the vertical surfaces, one of the holes has female screw thread which engages with the corresponding lead screw while another hole serves as passage for another lead screw to pass through, and the neck-ring seat is fastened to the top side of the sliding block with the mounting shaft of an upward yoke pivotally mounted in the mounting recess of the neck-ring seat.

5. The hex-axis horizontal movement dynamic simulator as defined in claim 4, wherein a fastening plate is fastened on the top side of the sliding block and the bottom side of the neck-ring seat is fastened to the top side of fastening plate.

6. A hex-axis horizontal movement dynamic simulator comprising three sets of movement control unit of the same structure located at the positions forming three sides of an equilateral triangle, and a load-carrying platform pivotally connected to the three movement control units by means of universal-joint yoke mechanism corresponding to each movement control unit, wherein each movement control unit comprises at least a machine bed, a set of universal-joint yoke mechanism, two connecting rods of fixed length, two sets of transmission-joint yoke mechanism, two sets of sliding seats two lead screws, two servo-driving mechanisms and a set of rectilinear transmission guide; wherein

the machine bed is a longitudinal stand having an inversed U shaped cross section with two cover plates fixed on both ends of the bed; the rectilinear transmission guide has two straight sliding rails parallel to each other and fastened on its top side and two guide seats having two parallel guide slots on the bottom side for matching the straight sliding rails and sliding in the direction of the straight rails;

each of servo-driving mechanisms is installed in the place near the end of the machine bed by a bearing plate to serves as the support of the two lead screws, the servo-driving mechanism also has a servo-motor installed inside the machine bed to construct a driving system with the corresponding lead screw to control the rotating angle and speed of the lead screw;

each sliding seat comprises at least a sliding block and a neck-ring seat, the bottom side of the sliding block is fastened on the guide seat of the rectilinear translation guide, and the sliding block has two penetrating holes on the vertical surface of which one holes has female screw thread for engaging with the corresponding lead screw while another hole serves as the passage for another lead screw to pass through, the neck-ring seat is fastened on the top side of the sliding block, and has a mounting recess in center position for pivotally installing the mounting shaft of the yoke of the transmission-joint yoke mechanism;

each transmission-joint yoke mechanism comprises an upward yoke and a T shaped pivot axis, the T shaped pivot axis has two horizontal stub shafts formed on, and extend from the opposite sides, and pivoted on the two vertical portions of the upward yoke, the T shaped pivot axis has a perpendicular stub shaft which is pivotally connected to one end of the corresponding connecting rod, a mounting shaft is formed on the bottom side of the upward yoke and is pivotally installed on the mounting recess of the corresponding sliding seat; and

the universal-joint yoke mechanism comprising a downward yoke, a cardan shaft, a neck-ring seat and a cover plate, the cardan shaft has two horizontal stub shafts formed on and extend from the left and right side, which are pivoted on the two vertical portions of the downward yoke, also two perpendicular stub shafts are formed, and extend from the rear and front side and are pivotally and separately mounted on one of the aforesaid two connecting rods, the downward yoke has a mounting shaft on the top side which is pivotally installed on the neck-ring sent, and the cover plate has its bottom side fastened on the neck-ring seat, and top side fastened to the aforesaid load-carrying platform.

7. The hex-axis horizontal movement dynamic simulator as defined in claim 6 wherein a fixing plate is installed on the top side of the sliding block and the bottom side of the neck-ring is fixed on the top side of the said fixing plate.

8. The hex-axis horizontal movement dynamic simulator as defined in claim 6 wherein the sliding seat is in the shape of a rectangular block having a mounting recess on the top side which is for pivotally installing the corresponding transmission-joint yoke mechanism, and the bottom side of the sliding block is fastened on the two sliding guides of the rectilinear translation guide, the sliding block has two penetrating holes on its vertical surface of which one hole has female screw thread for engaging with the corresponding lead screw while another hole serves as the passage for another lead screw to pass through.

9. A hex-axis horizontal movement dynamic simulator comprising three sets of movement control unit of the same structure located in the positions forming three sides of an equilateral triangle and load carrying platform connected to the three sets of movement control unit by means of universal-joint yoke mechanism on each set of movement control unit; wherein each movement control unit comprises at least one set of universal-joint yoke mechanism, two connecting rods of fixed length, two sets of sliding yoke mechanism, two lead screws, two sets of servo-driving mechanism and a rectilinear translation guide; wherein the rectilinear translation guide has two straight sliding rails parallel to each other and two guide seats each of which has two parallel guide slots on the bottom side for matching the two straight sliding rails and sliding along the direction of the rail; wherein

each servo-driving mechanism comprises at least one servo-motor which constructs the driving system with the corresponding lead screw for driving and controlling the rotating angle and speed of the lead screw;

each sliding yoke mechanism comprises an upward yoke, a pivoting plate, a shaft, two fixing block, one L shaped sliding yoke plate, one sliding fastening plate and two cover plates; the L shaped sliding yoke plate has a horizontal portion and a vertical portion, a pivoting hole is formed on the vertical portion, and the bottom side of the horizontal portion is fastened on the guide seat of the rectilinear transmission guide, the L shaped sliding yoke plate has two penetrating holes on the vertical portion, one of which has female screw thread for engaging with the corresponding lead screw while another hole serves as the passage for another lead screw to pass through; the L shape sliding yoke plate and the sliding fastening plate are assembled to form a set of L shaped yoke assembly, on the sliding fasting plate are two penetrating holes and a pivoting hole in the positions corresponding to the positions of the two penetrating holes and one pivoting hole on the L shaped sliding yoke plate, the two penetrating holes on the sliding fastening plate are the passages for the lead screws to pass through; the pivoting plate is in the shape of a rectangular plate with a pivoting recess on the center position and two horizontal stub shafts formed on and extend from two sides opposite to each other which are pivotally installed on the pivoting holes on the vertical portion of the L shaped sliding yoke plate and, the sliding fastening plate, and two cover plates are separately fastened on the vertical portion of the L shaped sliding yoke plate and the sliding fastening plate; the upward yoke has a mounting shaft on the bottom side which is pivotally installed on the pivoting recess in the center position of the pivoting plate, on the top side of the two vertical portions of the upward yoke are two semicircular recesses with which and the two fixing blocks having the same semicircular recesses fastened to the said two vertical portions, a shaft is pivotally mounted which is for mounting one end of the two connecting rods; and

the universal-joint yoke mechanism comprising a downward yoke, a pivoting plate, a shaft, two fixing blocks, a L shaped yoke plate, a fastening plate and two cover plates; the L shaped yoke plate has a horizontal portion and a vertical portion, the horizontal portion is fastened to the load-carrying platform, and vertical portion has a pivoting hole; the assembly of the L shaped yoke plate and fastening plate forms a downward yoke for mounting the stub shafts formed on and extended from the left and right side of the pivoting plate which is in the shape of a rectangular plate having a pivoting recess on center position, two cover plates are fastened on the vertical portion of L shaped yoke plate and the fastening plate to fix the whole assembly; the downward yoke has a mounting shaft which is pivotally installed on the pivoting recess in the center position of the pivoting plate which has semicircular recess on the bottom side of it two vertical portions for mounting a shaft by installing two fixing blocks having the same semicircular recess to the bottom side of the two vertical portions, and one end of each of the aforesaid two connecting rods are pivotally and separately mounted on both ends of the said shaft.

Fig. 1

Fig. 2

Fig. 3

Fig. 4

Fig. 5

EP 1 501 065 A1

Fig. 6

15

Fig. 7

Fig. 8

**EP 1 501 065 A1**

**European Patent Office**

**EUROPEAN SEARCH REPORT**

Application Number

EP 03 01 6720

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN<br>vol. 1998, no. 01,<br>30 January 1998 (1998-01-30)<br>-& JP 09 225868 A (AISIN SEIKI CO LTD),<br>2 September 1997 (1997-09-02)<br>* abstract; figures 4-6 * | 1,2 | G09B9/12<br>B25J17/02 |
| A |  | 3-9 | |
| X | G. PRITSCHOW, K.-H. WURST : "Systematic Design of Hexapods and Other Parallel Link Systems"<br>ANNALS OF THE CIRP, [Online] 1997, pages 291-295, XP002265846<br>Retrieved from the Internet:<br><URL:http://elib.uni-stuttgart.de/opus/vol ltexte/1999/406/pdf/406_1.pdf><br>[retrieved on 2003-12-19]<br>* page 292, column 1, paragraphs 1,2; figure 1 * | 1 | |
| A | US 6 099 217 A (WEIKERT SASCHA ET AL)<br>8 August 2000 (2000-08-08)<br>* abstract; figures 1-4 * | 1 | TECHNICAL FIELDS SEARCHED (Int.Cl.7)<br><br>G09B<br>B25J |
| A | PATENT ABSTRACTS OF JAPAN<br>vol. 2003, no. 11,<br>5 November 2003 (2003-11-05)<br>-& JP 2003 200367 A (JAPAN SCIENCE & TECHNOLOGY CORP;BOKU CHIYUUSHIYOKU),<br>15 July 2003 (2003-07-15)<br>* abstract; figure 1 * | 1 | |

-/--

The present search report has been drawn up for all claims

| Place of search | Date of completion of the search | Examiner |
|---|---|---|
| MUNICH | 19 December 2003 | Lumineau, S |

**European Patent Office**

## EUROPEAN SEARCH REPORT

Application Number

EP 03 01 6720

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | BEHI F: "KINEMATIC ANALYSIS FOR A SIX DEGREE OF FREEDOM 3-PRPS PARALLEL MECHANISM" IEEE JOURNAL OF ROBOTICS AND AUTOMATION, IEEE INC. NEW YORK, US, vol. 5, no. 4, 5 October 1988 (1988-10-05), pages 561-565, XP002074598 * the whole document * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 19 December 2003 | Lumineau, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 501 065 A1**

**ANNEX TO THE EUROPEAN SEARCH REPORT
ON EUROPEAN PATENT APPLICATION NO.**                EP 03 01 6720

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2003

| Patent document cited in search report | | Publication date | Patent family member(s) | | Publication date |
|---|---|---|---|---|---|
| JP 09225868 | A | 02-09-1997 | NONE | | |
| US 6099217 | A | 08-08-2000 | DE | 59603026 D1 | 14-10-1999 |
| | | | EP | 0868255 A1 | 07-10-1998 |
| | | | WO | 9722436 A1 | 26-06-1997 |
| | | | JP | 2000502000 T | 22-02-2000 |
| JP 2003200367 | A | 15-07-2003 | NONE | | |

For more details about this annex : see Official Journal of the European Patent Office, No. 12/82